# EUROPÄISCHE PATENTSCHRIFT

(11) **EP 0 483 571 B1**
(45) Veröffentlichungstag und Bekanntmachung des Hinweises auf die Patenterteilung: **01.02.1995**
(21) Anmeldenummer: 91117425.8
(22) Anmeldetag: 12.10.1991
(51) Int. Cl.: D21C 5/02

(54) **Verfahren zur Wiedergewinnung von Fasern durch Flotationsdeinken aus Altpapier**
Process for the recycling of fibers by flotation-deinking of waste paper
Procédé pour le recyclage de fibres par désencrage par flotation de vieux papiers

(30) Priorität: 30.10.1990 DE 4034457
(43) Veröffentlichungstag der Anmeldung: 06.05.1992
(73) Patentinhaber: BK LADENBURG GmbH, Gesellschaft für chemische Erzeugnisse, D-68526 Ladenburg (DE)
(72) Erfinder: Bast-Kemmerer, Inge Dr., D-6140 Benzheim (DE); Scholl, Magarete, W-6800 Mannheim 42 (DE)
(74) Vertreter: Grussdorf, Jürgen, Dr.

(56) Entgegenhaltungen:
- EP-A- 0 067 333
- EP-A- 0 446 564
- DE-B- 1 256 054
- FR-A- 1 399 796
- PATENT ABSTRACTS OF JAPAN, vol. 14, no. 030 (C-678) 19. Januar 1990 & JP-A-01266292 (SHIZUOKA PREFECTURE) 24. Oktober 1989

## Beschreibung

Die vorliegende Erfindung behandelt ein Verfahren zur Wiederaufbereitung von Altpapier unter besonderer Berücksichtigung von Druckschriften, die schwierig recyclisierbar sind.

Von der Wegwerfgesellschaft der 60iger Jahre hat sich in unserem Umweltbewußtsein ein Trend hin zum weitesgehenden Wiederverwerten vollzogen. Für den Papierverbrauch, der in den letzten jahren sehr stark angestiegen ist, bedeutet dies, daß der Rohstoff Altpapier nicht mehr nur für Verpackungsmaterialien oder Hygieneprodukte eingesetzt wird, sondern auch bei hochwertigen Papiersorten immer mehr an Bedeutung gewinnt. Durch die verstärkte Rückführung der Sekundärfasern in den Panierkreislauf kann ein Teil Zellstoff eigenspart werden. Dadurch wird auch die mit der Herstellung von Zellstoff verbundene Umweltbelastung (Chlorbleiche) reduziert.

Der Einsatz von Sekundärfasern bei hochwertigen Papieren setzt eine möglichst vollständige Entfernung von Verunreinigungen, die unter anderem als Hilfsstoffe ins System eingetragen werden, voraus. Um einen Faserbrei mit hohem Weißgrad zu erhalten, müssen die Druckpartikel von der Faser gelöst und abgetrennt werden. Bleich- und Entfärbungsverfahren unterstützen dabei die Verbesserung der Weiße.

Bei herkömmlichen Druckschriften, d.h. bei Zeitungen und Magazinen, die in Hoch-, Tief- oder Flachdruck bedruckt wurden, hat sich eine Defibrillierung im Alkalischen bewährt. Bei diesem Auflöseprozeß wird die Trennung von Faser und Farbfilm durch mechanische Kräfte unterstützt. Die Alkalizugabe bewirkt dabei neben einer teilweisen Verseifung der Bindemittel die Quellung der Fasern und damit das Absprengen der Druckfarbe.

Die Entfernung der Druckfarbe aus diesem Faserbrei erfolgt in einem zweiten Schritt, wobei grundsätzlich zwei Verfahren unterschieden werden.
Waschverfahren
Flotationsverfahren.

In Europa findet man fast ausschließlich das Flotationsverfahren, während in den USA und Canada noch das Waschverfahren überwiegt, jedoch der Trend in Richtung Flotation geht.

Die Zugabe der Chemikalien erfolgt bei beiden Verfahren in der Auflösestufe. Oberflächenaktive Substanzen erleichtern aufgrund ihrer guten Benetzung die Abtrennung der Farb- und Pigmentpartikel von der Faser.

Beim Waschdeinken wird zusätzlich ein Dispergiermittel zudosiert, um die erneute Agglomeration der abgelösten Teilchen zu verhindern. Die Schmutzteilchen bleiben feinst verteilt und behalten ihren hydrophilen Charakter, so daß sie aus dem Faserbrei ausgewaschen werden können. Für ein optimales Waschergebnis sollte die Teilchengröße unter 15 »m liegen, da größere Partikel von der Fasermatte zurückgehalten werden.

Mit den Schmutzteilchen werden auch Füll-und Feinstoffe ausgewaschen, so daß im Vergleich zum Flotationsdeinking die Gesamtausbeute niedriger ist.

Das Flotationsverfahren arbeitet mit einem wesentlich geringeren Wasserverbrauch. Schon beim Aufschuß wird ein Bleichmittel, in der Regel eine Peroxidverbindung, zugesetzt, um die Vergilbung der Faser zu verhindern. Damit die Peroxidverbindung ihre volle Wirksamkeit entfalten kann, müssen Schwermetalle, die den Zerfall des Peroxids in bleichunwirksame Spaltprodukte katalysieren, komplexiert werden. Wasserglas, das aufgrund seiner komplexierenden und dispergierenden Wirkung für den Auflöseprozeß selbst sehr gut geeignet ist, im System jedoch immer mehr zu Schwierigkeiten führt, wird mehr und mehr durch organische Komplexbildner verdrängt. Als Sammler für die Druckfarbenpartikel wirken Fettsäuren, die zusammen mit den im Wasser vorhandenen Calciumionen hydrophobierende Seifen bilden. Die Schmutzagglomerate lagern sich an den Luftblasen an, schwimmen an die Oberfläche und werden als schwarzer Schaum aus dem System abgetrennt.

Papiere, die nach modernen Druckverfahren wie z.B. Flexodruck, Xerographie usw. hergestellt werden, lassen sich mit dem Flotationsverfahren in dieser Form nicht recyclen. Die Ruß- und Pigmentpartikel, die bei den herkömmlichen Papieren nach der Defibrillierung noch größere, in Bindemittel eingebettete Agglomerate darstellen, liegen bei den Flexofarben in ihrer ursprünglichen Größe von wenigen Micron (Ruß: 0,02 - 0,03 »m, Buntpigment 0,1 - 0,4 »m) vor.

Diese kleinen Schmutzteilchen wären prädestiniert für das Waschverfahren, sind jedoch für das Flotationsverfahren nicht geeignet. Bei den Flexofarben kommt erschwerend hinzu, daß das Bindemittel (Acrylatbasis) im alkalischen Milieu als Dispergiermittel wirkt und die Druckpartikel feinst in der Fasersuspension verteilt.

Bei xerographischen Papieren besteht der Binder aus polymeren Systemen, die beim Druckvorgang über chemische Reaktionen aushärten und den Farbfilm fest auf die Faser fixieren. Der entstandene Farbfilm ist sehr elastisch und läßt sich beim Auflöseprozeß nicht von der Faser trennen. Der aufbereitete Stoff enthält daher noch viele Schmutzpunkte.

Aufgabe der vorliegenden Erfindung war es daher, ein Verfahren zu finden, mit dem auch Flexodruck und Xerographiepapiere befriedigend deinkt werden können. Diese Aufgabe wird durch die Merkmale der Ansprüche gelöst oder gefördert.

Mit der Verbesserung der Deinkbarkeit dieser Spezialdruckpapiere haben sich schon einige Patente beschäftigt, die sich jedoch in der Praxis nicht durchsetzen konnten (US-A-4 276 118, US-A-3 635 789, US-A-3 846 227, US-A-4 561 933).

Aus der EP-A 0 067 333 ist bekannt, beim Denken von Altpapier Fettsäuren und/oder Harzsäuren und Dispergiermittel in Form einer Wasser-in-Öl-Suspension zu dem Papierbrei zuzugeben. Durch die Verseifung der Fettsäuren aus dieser Emulsion sollen sich Kalkseifen in sehr feinen Flocken bilden, die als selektive Sammler für die Druckfarben wirken und ihre Wiederanlagerung an die Faser verhindern. Als nichtionogene Dispergiermittel (Tenside) werden unter anderem "Fettalkoholpolyglycolether" genannt, wobei der Fettalkoholanteil aus einer langen hydrophoben Kette, üblicherweise einem Stearyl- oder Palmitylrest besteht, während der Polyglycolanteil den hydrophilen Anteil des Tensids ausmacht. Polyglycole oder Polyglycolether mit einer kurzen Alkylkette von höchstens 6 C-Atomen Länge sind als Dispergiermittel ungeeignet.

Aus der DE-B 12 56 054 ist bekannt, Phenolpolyglycolether als stark oberflächenaktive Verbindungen in Deinkinggemischen einzusetzen. Die Mischung soll ferner noch einen Polyalkohol in einer halben bis doppelten Menge der oberflächenaktiven Verbindung enthalten. Entscheidend für diese Anwendung scheint zu sein, daß die Druckfarbe durch das in einem wäßrigen Medium gelöste Detergenz abgelöst wird und bei erhöhter Temperatur ein aus Kondensationsprodukten und Verunreinigungen sowie Druckfarbe bestehendes Öl aus der wäßrigen Phase wieder ausfällt. Die hierzu notwendigen Phenolverbindungen sind als gesundheitsgefährdende Stoffe unerwünscht.

Die vorliegende Erfindung stellt ein Verfahren vor, das sowohl in ökologischer Hinsicht unbedenklich ist und auch für den Papiererzeuger keinerlei gesundheitliche Gefährdung in sich birgt. Das technisch einfache Verfahren hat zusätzlich den Vorteil, daß auf Wasserglas verzichtet bzw. sein Anteil sehr stark reduziert werden kann.

Bei dem vorgestellten Verfahren wird neben den üblichen Flotationshilfsmitteln dem Papierbrei ein Additiv zugesetzt, welches einerseits die Ablösung der Farbpigmente von den Fasern verbessert und gleichzeitig auch feinste Farbpartikelchen zu flotierbaren Agglomeraten kondensiert, so da sie abgetrennt werden können.

Das Additiv besteht aus:
a) einem Polyglycol der folgenden Struktur 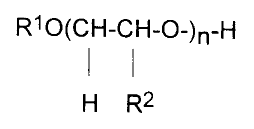 wobei R¹ Wasserstoff bzw. eine C1 - C6-Alkylgruppe,
   R² Wasserstoff oder eine Alkylgruppe mit 1-8 C-Atomen, bevorzugt eine Methylgruppe ist,
   und der Polymerisationsgrad n einem durchschnittlichen Molekulargewicht von 1000-15000 g/Mol entspricht,
b) einem oberflächenaktiven Mittel in einer Konzentration von bis zu 10 %, vorzugsweise bis zu 3 %, bezogen auf die Menge des Polyglycols, sowie gegebenenfalls Wasser oder anderen polaren Lösungsmitteln.

Die Glycolkomponente bildet zusammen mit dem Bindemittel der Druckfarbe hydrophobe Strukturen aus, an denen sich auch kleinste Farbpartikelchen anreichern lassen.

Die Tensidanteile setzen die Oberflächenspannung des Wassers herab und ermöglichen dadurch eine bessere Benetzung der Faser. Die Druckfarben lassen sich dadurch besser von der Faser ablösen.

Als Tenside haben sich nichtionogene und saure Ester und Estergemische besonders bewährt, wobei die eingesetzten Alkohole eine Kettenlänge von C1 bis C 20 haben.

Durch diese duale Wirkungsweise wird nicht nur der Weichgrad verbessert, sondern auch die Zahl der Schmutzpunkte, die speziell bei Kopier- und Laserdruckpapieren eine starke Beeinträchtigung darstellte, sehr stark reduziert.

Das beschriebene Deinkinghilfsmittel kann zusammen mit den üblicherweise eingesetzten Fettsäuren oder als alleiniger Sammler eingesetzt werden. Die optimale Wirksamkeit entfaltet das erfindungsgemäße Produkt bei einem pH-Wert zwischen 8,5 und 9 im Pulper. Die Absenkung des pH-Wertes von üblicherweise 10,5 bei der Auflösung vermeidet eine Vergilbung des Papiers und spart Natronlauge ein, ist jedoch immer noch ausreichend, um die Aktivierung des Peroxids zu gewährleisten.

Ein erfindungsgemäß verwendbares Deink-Medium besteht aus

| | |
|---|---|
| Peroxid | 0,5 - 2 % |
| Fettsäure | 0,5 - 2 % |
| Komplexbildner | 0,1 - 0,4 % |
| Natronlauge | 0,5 - 1 % |

sowie 0,1 - 3 % des vorstehenden Additivs.
Weitere übliche Deinkungshilfsstoffe können in bekannter Weise zusätzlich eingesetzt werden.

Für die folgenden Versuche wurden Additive der folgenden Zusammensetzung verwendet:
- Additiv A: 97 % Polyglykol-monobutylether, Molgew. ca. 2000, 3 % Tensid (handelsübliches Gemisch aus Phosphorsäure-mono-mono-diestern von Gemischen aus i. Tridecanol und 2-Ethylhexanol
- Additiv B: 97 % Polyglykol, Molgew. 4000, 3 % d. o. Tensids
- Additiv C: 97 % Polyglykol-mono(1-methylethylether), Molgew. 7000, 3 % d. o. Tensids.

### Beispiele

Für die Laborversuche werden die entsprechenden Papiersorten im Aktenvernichter zerkleinert. Das Papier wurde dann im Laborpulper zusammen mit der Deinkinglösung aus Stabilisator, Natronlauge, Fettsäure und Wasserstoffperoxid bei 2.800 Umdrehungen 15 Minuten aufgeschlagen. Die Stoffdichte betrug 3 %.

Für die Versuche wurde Stadtwasser mit einer durchschnittlichen Härte von 27 dH verwendet, der pH wurde auf 9 eingestellt.

Nach der Defibrillierung schloß sich eine Reaktionszeit von 90 Minuten im 50°C warmen Wasserbad an. Die Mischung wurde dann in einer Laborzelle auf eine Stoffdichte von 0,8 % verdünnt und 10 Minuten flotiert. Nach Beendigung der Flotation wurde mit Schwefelsäure neutralisiert, Blätter gebildet und Weißgrad bestimmt.

| **Flexodruck** | | | | |
|---|---|---|---|---|
| Zusatz | vor Flotation | | nach Flotation | |
| | R 457 | Y/C | R 457 | Y/C |
| ohne | 48,0 | 53,6 | 48,5 | 53,5 |
| Additiv A | 46,1 | 51,2 | 52,2 | 59,0 |
| Additiv B | 46,1 | 50,9 | 51,8 | 57,9 |
| Additiv C | 48,0 | 53,9 | 54,3 | 61,9 |
| 0,5 % Stabilisator, 0,8 % Peroxid, 0,5 % Seife, 1 % Additiv | | | | |

| **Fotokopien** | | | | | |
|---|---|---|---|---|---|
| Zusatz | vor Flotation | | nach Flotation | | Schmutzpunkte |
| | R 457 | Y/C | R 457 | Y/C | |
| ohne | 74,8 | 71,5 | 84,2 | 80,1 | 1477 |
| Lösungsmittel | 75,8 | 72,8 | 87,5 | 82,8 | 79 |
| Additiv A | 72,9 | 69,8 | 91,6 | 87,3 | 97 |
| Additiv B | 73,9 | 70,6 | 92,8 | 87,6 | 41 |
| Additiv C | 75,2 | 70,0 | 92,7 | 87,6 | 51 |
| 0,1 % Stabilisator, 0,8 % Peroxid, 0,5 % Fettsäure, 0,5 % Additiv | | | | | |

| **Laserdruck** | | | | | |
|---|---|---|---|---|---|
| Zusatz | vor Flotation | | nach Flotation | | Schmutzpunkte |
| | R 457 | Y/C | R 457 | Y/C | |
| ohne | 82,8 | 80,7 | 87,4 | 82,8 | 1644 |
| Lösungsmittel | 85,0 | 82,1 | 87,9 | 84,2 | 453 |
| Additiv A | 84,1 | 81,6 | 89,9 | 85,8 | 87 |
| Additiv B | 84,0 | 80,4 | 89,6 | 85,8 | 60 |
| Additiv C | 83,7 | 80,6 | 89,7 | 85,5 | 58 |
| 0,1 % Stabilisator, 0,8 % Peroxid, 0,5 % Fettsäure, 0,1 % Additiv | | | | | |

| **NCR-Papier** | | | | |
|---|---|---|---|---|
| Zusatz | vor Flotation | | nach Flotation | |
| | R 457 | Y/C | R 457 | Y/C |
| ohne | 54,8 | 53,9 | 61,6 | 60,2 |
| Lösungsmittel | 61,5 | 60,3 | 65,1 | 63,6 |
| Additiv A | 58,5 | 58,0 | 66,9 | 64,6 |
| Additiv B | 59,0 | 58,2 | 69,0 | 67,1 |
| Additiv C | 58,8 | 58,0 | 69,6 | 67,5 |

0,1 % Stabilisator, 0,8 % Peroxid, 0,5 % Fettsäure, 0,1 % Additiv

## Patentansprüche

1. Verfahren zur Wiedergewinnung von Fasern durch Flotationsdeinken aus Altpapier, welches durch Flexodruck oder Xerographie gefärbt ist, durch Zerfasern des Papiers in einem wäßrigen Medium unter Zugabe von Bleichchemikalien und Hilfsmitteln, enthaltend:
| | |
|---|---|
| Peroxid | 0,5 - 2 % |
| Fettsäure | 0,5 - 2 % |
| Komplexbildner | 0,1 - 0,4 % |
| Natronlauge | 0,5 - 1 % |
und oberflächenaktive Verbindungen
**dadurch gekennzeichnet,** daß dem Papierbrei 0,1 bis 3 % eines Additivs zudosiert werden, basierend auf:
a) einem Polyglycol folgender Struktur 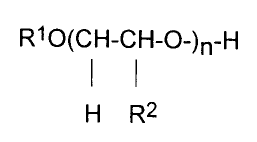 wobei
R¹ Wasserstoff bzw. eine C1-C6-Alkylgruppe,
R² Wasserstoff oder eine Alkylgruppe mit 1-8 C-Atomen und der Polymerisationsgrad n einem Molgewicht von 1000 bis 15000 g/Mol entspricht,
b) sowie ein oberflächenaktives Mittel in einer Menge bis zu 10 % des Polyglycols.

2. Verfahren nach Anspruch 1, **dadurch gekennzeichnet**, daß dieses Additiv bis zu 3 % einer oberflächenaktive Verbindung enthält.

3. Verfahren nach Anspruch 2, **dadurch gekennzeichnet,** daß es sich bei der oberflächenaktiven Verbindung um ein komplexes Gemisch verschiedener Ester handelt, wobei die eingesetzten Alkohole eine Kettenlänge von C1 bis C20 haben und die zur Veresterung dienenden Säuren, anorganische Säuren, insbesondere Phosphorsäure, oder organische Säuren, insbesondere Zitronensäure oder Milchsäure, Fettsäuren oder Essigsäuren, sind.

4. Verfahren nach einem der Ansprüche 1 bis 3, **dadurch gekennzeichnet,** daß es sich bei den verwendeten Polyglycolen nicht um einheitliche Verbindungen, sondern um Gemische polymerhomologer Verbindungen mit durchschnittlichen Molekulargewichten von 1000 bis 15 000 g/Mol handelt.

5. Verfahren nach einem der Ansprüche 1 bis 4, **dadurch gekennzeichnet,** daß ein Polyglycol gemäß Anspruch 1 eingesetzt wird, in dem R² teilweise H und teilweise eine Methylgruppe ist, wobei die Verteilung in den gebildeten Blockpolymerisaten statistisch vorliegt.

6. Mittel zum Deinken von Altpapier, insbesondere von durch Xerographie oder Flexodruck gefärbtem Papier, wobei die Schmutzabtrennung in einer Flotationsstufe erfolgt, **dadurch gekennzeichnet**, daß ein Additiv gemäß Anspruch 1 enthalten ist.

7. Mittel gemäß Anspruch 6 enthaltend Additive gemäß einem der Ansprüche 2 bis 5.

## Claims

1. Process for the recovery of fibres by floatation de-inking from waste paper which is coloured by flexographic printing of xerography by defibration of the paper in on aqueous medium,with addition of bleaching chemicals and adjuvants, containing:
| | |
|---|---|
| peroxide | 0.5 - 2% |
| fatty acid | 0.5 - 2% |
| complex former | 0.1 - 0.4% |
| caustic soda solution | 0.5 - 1% |
and surface-active compounds,
characterised in that into the paper slurry are dosed in 0.1 to 3% of an additive based on
a) a polyglycol of the following structure 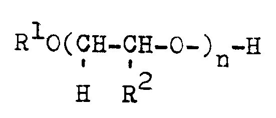 whereby R¹ is hydrogen or a C₁-C₆-alkyl group, R² hydrogen or an alkyl group with 1 - 8 C-atoms and the degree of polymerisation n corresponds to a mol weight of 1000 to 15000 g/mol,
b) as well as a surface-active agent in an amount of up to 10% of the polyglycol.

2. Process according to claim 1, characterised in that this additive contains up to 3% of a surface-active compound.

3. Process according to claim 2, characterised in that in the case of the surface-active compound it is a question of a complex mixture of different esters, whereby the alcohols used have a chain length of C₁ to C₂₀ and the acids serving for the esterification are inorganic acids, especially phosphoric acid, or organic acids, especially citric acid or lactic acid, fatty acids or acetic acids.

4. Process according to one of claims 1 to 3, characterised in that, in the case of the polyglycols used, it is not a question of uniform compounds but of mixtures of polymer-homologous compounds with average molecular weights of 1000 to 15000 g/mol.

5. Process according to one of claims 1 to 4, characterised in that a polyglycol according to claim 1 is used in which R² is partly H and partly a methyl group, whereby the distribution in the block polymers formed is present statistically.

6. Agent for the de-inking of waste paper, especially of paper coloured by xerography of flexographic printing, whereby the dirt separation takes place in a floatation step, characterised in that an additive according to claim 1 is present.

7. Agent according to claim 6 containing additives according to one of claims 2 to 5.

## Revendications

1. Procédé pour le recyclage de fibres par désencrage par flottation de vieux papiers qui ont été colorés par flexographie ou par xérographie, par défibrage du papier dans un milieu aqueux avec addition de produits chimiques de blanchiment et d'adjuvants contenant :
| | |
|---|---|
| peroxyde | 0,5-2% |
| acide gras | 0,5-2% |
| formateur de complexe | 0,1-0,4% |
| soude caustique | 0,5-1% |
et de composés tensioactifs,
caractérisé en ce que, à la pâte de papier, on ajoute de manière dosée de 0,1 à 3% d'un additif à base
a) d'un polyglycol ayant la structure ci-après 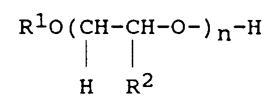 dans laquelle
R¹ représente un atome d'hydrogène, respectivement un groupe alkyle en C₁-C₆,
R² représente un atome d'hydrogène ou un groupe alkyle contenant de 1 à 8 atomes de carbone, et
le degré de polymérisation n correspond à un poids molaire de 1000 à 15 000 g/mole,
b) et d'un agent tensioactif en une quantité allant jusqu'à 10% du polyglycol.

2. Procédé selon la revendication 1, caractérisé en ce que cet additif contient, à concurrence de 3%, un composé tensioactif.

3. Procédé selon la revendication 2, caractérisé en ce que, quant au composé tensioactif, il s'agit d'un mélange complexe de différents esters, les alcools mis en oeuvre possédant une longueur de chaîne de C₁ à C₂₀ et les acides servant à l'estérification étant des acides inorganiques, en particulier l'acide phosphorique, ou encore des acides organiques, en particulier l'acide citrique ou l'acide lactique, des acides gras ou des acides acétiques.

4. Procédé selon l'une quelconque des revendications 1 à 3, caractérisé en ce que, en ce qui concerne les polyglycols utilisés, il ne s'agit pas de composés homogènes, mais bien de mélanges de composés homologues polymères possédant des poids moléculaires moyens de 1000 à 15 000 g/mole.

5. Procédé selon l'une quelconque des revendications 1 à 4, caractérisé en ce qu'on met en oeuvre un polyglycol selon la revendication 1, dans lequel R² représente en partie H et en partie un groupe méthyle, la répartition dans les polymères séquencés que l'on obtient étant une répartition statistique.

6. Agent pour le désencrage de vieux papiers, en particulier de papier coloré obtenu par xérographie ou par flexographie, la séparation des impuretés ayant lieu dans une étape de flottation, caractérisé en ce qu'il contient un additif selon la revendication 1.

7. Agent selon la revendication 6, contenant des additifs selon l'une quelconque des revendications 2 à 5.
